# EUROPÄISCHE PATENTSCHRIFT

(11) **EP 3 376 485 B1**
(45) Veröffentlichungstag und Bekanntmachung des Hinweises auf die Patenterteilung: **24.04.2024**
(21) Anmeldenummer: 18159344.3
(22) Anmeldetag: 01.03.2018
(51) Int. Cl.: H02J 1/00, G08G 1/07, G08G 1/097, H02J 7/00

(54) **SIGNALGEBEREINHEIT MIT INTEGRIERTEM RÜCKKANAL**
SIGNAL ENCODER UNIT WITH INTEGRATED RETURN PATH
UNITÉ D'ÉMISSION DE SIGNAL À CANAL DE RETOUR INTÉGRÉ

(30) Priorität: 13.03.2017 DE 102017204080
(43) Veröffentlichungstag der Anmeldung: 19.09.2018
(73) Patentinhaber: Yunex GmbH, 81739 München (DE)
(72) Erfinder: Baumann, Stefan, 81547 München (DE); Buchner, Johannes, 85391 Allershausen (DE); Böttcher, Tim, 15834 Rangsdorf (DE)
(74) Vertreter: Patentanwaltskanzlei WILHELM & BECK

(56) Entgegenhaltungen:
- WO-A1-01/13491
- DE-A1- 10 158 678
- DE-U1- 20 019 560
- US-B1- 8 193 662

## Beschreibung

Die Erfindung betrifft eine Schaltungsanordnung zur Rückübertragung von Überwachungsdaten eines sich selbst überwachenden Signalgebers einer Lichtsignalanlage. Zudem betrifft die Erfindung eine Signalgebereinheit. Außerdem betrifft die Erfindung eine Lichtsignalanlage. Die Erfindung betrifft auch ein Verfahren zum Überwachen einer Signalgebereinheit.

Lichtsignalanlagen, auch Lichtzeichenanlagen genannt, dienen der Steuerung des Straßenverkehrs. Sie ordnen für Verkehrsteilnehmer ein bestimmtes Verhalten an, indem gesteuerte Lichtsignale abgegeben werden. Diese nach Form und Farbe verschiedenartigen Verkehrszeichen haben jeweils eine andere Bedeutung und strahlen nur entgegen der Fahrtrichtung des zu regelnden Verkehrs ab. Werden diese Einrichtungen im Straßenverkehr genutzt, so werden Lichtsignalanlagen umgangssprachlich auch als Verkehrsampeln bezeichnet. Der Einsatz von Lichtsignalanlagen hat unterschiedliche Gründe, beispielsweise um den Verkehrsfluss zu verbessern und gefährliche oder gefahrenträchtige Verkehrssituationen zu entschärfen. Im Straßenverkehr sind dies insbesondere Einmündungen sowie Engstellen, z.B. bei Baustellen oder Brücken. Die Bauelemente, welche die Lichtzeichen umfassen, mit denen dem Verkehrsteilnehmer Informationen übermittelt werden, sollen im Folgenden als Signalgeber bezeichnet werden.

Lichtsignalanlagen weisen zur Anzeige der Lichtsignale Signalgeber auf. Bei solchen Signalgebern handelt es sich um sicherheitsrelevante Bauteile, denn bei deren technischem Versagen können Menschenleben gefährdet werden. Es wird daher ein erheblicher Aufwand getrieben, damit gewährleistet ist, dass der Signalgeber in seiner Funktion, insbesondere einzelne Leuchtelemente ein- und auszuschalten, überwacht werden kann. In der Vergangenheit wurde hierzu analoge Schaltungstechnik genutzt, in der jüngeren Zeit wurden die Signalgeber digitalisiert. Bei einer herkömmlichen Überwachungsschaltung steuern und überwachen zwei Prozessoren, um Redundanz zu erreichen, die Funktion des Signalgebers. Für den Fall, dass ein oder mehrere der überwachten Parameter, wie zum Beispiel die Helligkeit, die Stromstärke, die elektrische Spannung, zulässige Schwellwerte überschreiten oder unterschreiten, so wird der Signalgeber durch das Auslösen einer Sicherung dauerhaft und irreversibel deaktiviert. In Abhängigkeit vom Einsatz des Signalgebers kann das dazu führen, dass die gesamte Ampelanlage komplett dunkel geschaltet ist oder dauerhaft ein Warnlicht abgibt. Die daraus sich ergebende Verkehrsstörung kann je nach Größe der Kreuzung und dem Umfang des Verkehrs erheblich sein.

Um solche Störungen zu vermeiden, wäre es wünschenswert, schon vor dem tatsächlichen Ausfall der Signalgeber zu erkennen, wenn sich die Lebensdauer eines der Funktionselemente des Signalgebers, d.h. insbesondere der Funktionselemente zur Anzeige der Lichtzeichen, dem Ende zuneigt. Beispielsweise sollte die Überwachung der bereits erwähnten technischen Parameter des Signalgebers derart erfolgen, dass bereits detektiert wird, wenn sich die entsprechenden Werte dieser Parameter den jeweiligen Schwellenwerten nähern, dies aber noch nicht erreicht bzw. unterschritten oder überschritten haben.

Ein weiteres Problem betrifft die Übermittlung der Überwachungsdaten von dem Signalgeber an einen Betreiber der betreffenden Lichtsignalanlage, damit dieser rechtzeitig einzelne Funktionselemente des Signalgebers ersetzen kann. Üblicherweise werden die Signalgeber lediglich über zwei Leitungsstränge, einen Hinleiter und einen Rückleiter, mit elektrischer Spannung versorgt. Ein drahtgebundener Rückkanal zur Datenübertragung ist dagegen nicht vorgesehen. Würde man zusätzliche Leitungen dafür in einer Lichtsignalanlage installieren, so würden aufgrund des Verkabelungsaufwands die Kosten in etwa verdoppelt werden.

Eine Möglichkeit, die Kosten zu senken, besteht darin, die Datenübertragung per Funk zu implementieren, was jedoch den Nachteil mit sich bringt, dass bei den üblichen Verfahren, wie zum Beispiel TDMA, FDMA, der Zugriff auf das Übertragungsmedium geteilt werden muss. Ein weiterer Nachteil ist, dass bei solchen Übertragungstechniken nicht kontinuierlich, sondern nur zu bestimmten Zeitpunkten gesendet werden kann. Daher variiert hier der Stromverbrauch mit der Zeit erheblich. Da auch die Stromaufnahme als sicherheitsrelevanter Parameter von der Steuerungseinrichtung der Signalgeber überwacht wird, darf dieser Wert nur in ganz engen Grenzen schwanken.

Eine Möglichkeit, zumindest die Wahrscheinlichkeit eines plötzlichen Ausfalls einer Lichtsignalanlage stark zu reduzieren, besteht darin, Funktionselemente der Signalgeber regelmäßig auszutauschen, auch wenn diese noch einwandfrei funktionieren, was allerdings zu erheblichen Kosten führt. Diese ergeben sich aus der Anfahrt, dem notwendigen Personal und dem zur Verfügung zu stellenden Material.

Bei einer analog ausgebildeten Lichtsignalanlage wurde im Jahre 2005 in Berlin ein Auftrag für ein Lichtüberwachungssystem mit einem Rückkanal erteilt. Ein solches Lichtüberwachungssystem weist drei Licht-Monitor-Baugruppen im Signalgeber sowie eine zusätzliche Verkabelung und eine Sendebaugruppe mit einem Funkmodul STM100 auf. Das als "Berliner Lösung" bekannte System arbeitet mit einer Batterie, die spätestens nach zehn Jahren ausgetauscht werden muss. Weiterhin sind die Kosten für die Implementierung des Lichtüberwachungssystems recht hoch.

In DE 295 16 439 wird eine Vorrichtung zur Fernüberwachung des Betriebszustands von Lichtsignalanlagen beschrieben. Es werden Überwachungsdaten in digitaler Form mit Hilfe einer Sende- Empfangseinheit an eine Überwachungszentrale übertragen.

In DE 10 2009 017 989 A1 wird eine Beleuchtungsanordnung beschrieben, welche eine Überwachungseinrichtung umfasst, die an eine Leitung angeschlossen ist, über die die Beleuchtungseinheiten der Beleuchtungsanordnung von einem Vorschaltgerät mit Betriebsleistung versorgt werden. Die Überwachungseinrichtung überwacht eine an der Leitung erfassbare elektrische Größe, beispielsweise die an den Beleuchtungseinheiten entstehende elektrische Spannung.

In DE 27 49 401 A1 wird ein Überwachungs- und Fernsteuersystem für Lichtsignalanlagen beschrieben.

In DE 101 58 678 A1 wird eine Lichtsignalanlage mit einer Funkeinheit beschrieben, die mit einer Basisstation Datensignale austauscht.

In DE 10 2005 032 719 A1 wird eine Lichtsignalanlage mit mindestens einem Leuchtdioden aufweisenden Signalgeber beschrieben. Die Lichtsignalanlage weist ein Steuergerät zur Ansteuerung, Auswertung und Überwachung des mindestens einen Signalgebers auf.

In DE 200 19 560 U1 wird eine Einrichtung zur Objektüberwachung und Meldung von Störungen, beispielsweise zur Überwachung von technischen Anlagen, Gebäuden und mobilen Objekten, insbesondere von mobilen Lichtsignalanlagen über den Straßenverkehr beschrieben. Dabei ist eine Informationssignale erzeugende Überwachungseinrichtung mit Mitteln der Kommunikationstechnik zur selbsttätigen Fernübertragung von optischen und/oder akustischen Warnhinweisen an einen Empfänger kombiniert.

In US 8 193 662 B1 wird eine Stromversorgung mit einem Netzteil und einem Akkumulator beschrieben. Der Akkumulator dient dazu, Schwankungen bei der netzseitigen Stromversorgung auszugleichen.

In WO 01/ 13491 A1 wird eine Stromversorgung mit einem Netzteil, einer Gleichspannungsquelle, zwei Spannungsbussen und einer bidirektionalen Gleichspannungsquellen-Verbindungseinheit beschrieben. Mit der Stromversorgung soll eine sichere Energieversorgung für Computersysteme zur Verfügung gestellt werden.

Es besteht also das Problem, eine sichere und einfachere Anordnung zur Funktionsüberwachung eines Signalgebers zu entwickeln.

Diese Aufgabe wird durch eine Schaltungsanordnung gemäß Patentanspruch 1, durch eine Signalgebereinheit gemäß Patentanspruch 11, eine Lichtsignalanlage gemäß Patentanspruch 12 und ein Verfahren zum Überwachen eines Signalgebers gemäß Patentanspruch 13 gelöst.

Die erfindungsgemäße Schaltungsanordnung zur Rückübertragung von Überwachungsdaten eines sich selbst überwachenden Signalgebers einer Lichtsignalanlage weist eine elektronische, drahtgebundene Schnittstelle zum Empfangen von Überwachungsdaten von dem Signalgeber auf. Die Überwachungsdaten betreffen zu überwachende Funktionseinheiten des Signalgebers. Als selbstüberwachend soll in diesem Zusammenhang ein Signalgeber verstanden werden, der mit Hilfe von Messeinrichtungen, wie zum Beispiel Sensoren, Messwerte ermittelt, welche über den Zustand, insbesondere über die Funktionsfähigkeit und/oder den technischen Zustand oder den Alterungszustand seiner Funktionseinheiten, insbesondere seiner Leuchteinheiten, Auskunft geben. Die Überwachungsdaten werden also von dem Signalgeber durch Überwachung mindestens einer seiner Funktionseinheiten erzeugt. Weiterhin umfasst die erfindungsgemäße Schaltungsanordnung auch eine Funkeinheit zur Übermittlung der Überwachungsdaten an eine externe Signalgeber-Wartungseinrichtung.

Unter einem Signalgeber im Zusammenhang mit der erfindungsgemäßen Schaltungsanordnung soll eine Einheit verstanden werden, welche ein Lichtsignal ausgibt, das von außenstehenden Geräten oder Personen, wie zum Beispiel Verkehrsteilnehmern, erfasst und bezüglich einer für sie relevanten Information interpretiert werden kann. Beispielsweise umfasst das Signal eines Signalgebers eine Anweisung oder eine Warnung, welche von den betroffenen Personen oder Geräten verstanden bzw. weiterverarbeitet werden kann. Ein solches Signal kann insbesondere ein Lichtsignal zur Verkehrsregelung, besonders bevorzugt ein farbiges Lichtsignal zur Verkehrsregelung an Kreuzungen oder Abzweigungen sein.

Die externe Signalgeber-Wartungseinrichtung dient der Überwachung der Funktionsfähigkeit des Signalgebens. Die externe Signalgeber-Wartungseinrichtung ist dazu eingerichtet, die von der Funkeinheit der Schaltungsanordnung empfangenen Überwachungsdaten zu analysieren und gegebenenfalls Wartungsprozesse einzuleiten.

Außerdem weist die erfindungsgemäße Schaltungsanordnung eine Spannungsversorgungsschnittstelle auf, welche mit der elektrischen Spannungsversorgung des Signalgebers elektrisch verbunden ist. Vorteilhaft kann bei dieser Ausgestaltung die elektrische Spannungsversorgung des Signalgebers mitbenutzt werden, so dass keine eigene Versorgungspannungsquelle, beispielsweise in Form einer in die Schaltungsanordnung eingebauten Batterie, genutzt werden muss. Mithin wird der Aufbau der Schaltungsanordnung vereinfacht und kostengünstiger.

Aus Sicherheitsgründen ist es üblich, die Stromaufnahme und den Spannungsabfall am Signalgeber genau zu überwachen, um festzustellen, dass dieser sicher eingeschaltet oder ausgeschaltet ist. Daher darf sich der Spannungsabfall bzw. die Stromaufnahme des Signalgebers nur in einem vorbestimmten kleinen Bereich ändern. Wird nun an die Versorgungspannungsquelle eine zusätzliche Last, beispielsweise in Form der Funkeinheit der erfindungsgemäßen Schaltungsanordnung angeschlossen, so kann es bei einem aktiven Betrieb der Funkeinheit, sei es bei einem Sendebetrieb oder einem Empfangsbetrieb, zu einem nicht mehr tolerablen Spannungsabfall der Spannungsversorgung des Signalgebers kommen. Um eine solche Fehlfunktion zu vermeiden, weist die erfindungsgemäße Schaltungsanordnung eine Strombegrenzungseinheit auf, welche dazu eingerichtet ist, einen über die Spannungsversorgungsschnittstelle bezogenen elektrischen Strom auf einen vorbestimmten Maximalwert zu beschränken.

Weiterhin weist die erfindungsgemäße Schaltungsanordnung einen wiederaufladbaren elektrischen Energiespeicher zur Energieversorgung der Funkeinheit während eines Sende-/Empfangsbetriebs der Funkeinheit auf. Als wiederaufladbarer Energiespeicher kann zum Beispiel ein Kondensator, der während einer Phase, während keine Funkübertragung stattfindet, über die Versorgungsspannungsquelle aufgeladen wird. Während einer Phase, während der eine Funkübertragung durch die Funkeinheit stattfindet, gibt der wiederaufladbare Energiespeicher dann seine elektrische Energie an die Stromverbraucher der Schaltungsanordnung, insbesondere die Funkeinheit ab, so dass ein erhöhter Energieverbrauch der Funkeinheit gedeckt werden kann, ohne das die von der Strombegrenzungseinheit durchgeführte Strombeschränkung aufgehoben werden muss. Da für eine hinreichende Reichweite die Stromaufnahme der Funkeinheit üblicherweise deutlich größer ist als der durch die Strombegrenzung erlaubte Maximalwert, wäre ohne den Energiespeicher ein solcher Funkbetrieb nicht oder nur sehr eingeschränkt möglich. Alternativ oder zusätzlich kann der wiederaufladbare Energiespeicher auch einen Akkumulator umfassen.

Die erfindungsgemäße Signalgebereinheit weist eine elektrische Spannungsversorgungsschnittstelle, mindestens einen Signalgeber, eine Überwachungsschaltung zur Überwachung der Funktionseinheiten des mindestens einen Signalgebers und eine erfindungsgemäße Schaltungsanordnung auf.

Die erfindungsgemäße Lichtsignalanlage weist mindestens eine Signalgebereinheit, eine zentrale Steuerungseinheit zur Ansteuerung der mindestens einen Signalgebereinheit und eine erfindungsgemäße Schaltungsanordnung auf. Vorteilhaft umfasst die erfindungsgemäße Lichtsignalanalage einen Rückkanal zur Rückübermittlung von Überwachungsdaten betreffend die Funktionsfähigkeit ihres Signalgebers. Mithin ist eine ständige Überwachung des technischen Zustands der Signalgeber von einer zentralen Wartungseinrichtung als vereinfacht realisierbar.

Bei dem erfindungsgemäßen Verfahren zum Rückübertragen von Überwachungsdaten eines sich selbst überwachenden Signalgebers einer Lichtsignalanlage werden Überwachungsdaten betreffend zu überwachenden Funktionseinheiten des Signalgebers von dem Signalgeber durch eine Schaltungsanordnung über eine elektronische drahtgebundene Schnittstelle drahtgebunden empfangen. Die empfangenen Überwachungsdaten werden an eine externe Signalgeber-Wartungseinrichtung durch eine Funkeinheit der Schaltungsanordnung übermittelt.

Die Schaltungsanordnung wird durch eine Spannungsversorgungsschnittstelle, welche mit der elektrischen Spannungsversorgung des Signalgebers elektrisch verbunden ist, mit elektrischer Energie versorgt. Es wird zudem ein über die Spannungsversorgungsschnittstelle bezogener elektrischer Strom auf einen vorbestimmten Maximalwert beschränkt. Die Funkeinheit wird durch einen wiederaufladbaren elektrischen Energiespeicher während eines Sende-/Empfangsbetriebs der Funkeinheit mit elektrischer Energie versorgt.

Die abhängigen Ansprüche sowie die nachfolgende Beschreibung enthalten jeweils besonders vorteilhafte Ausgestaltungen und Weiterbildungen der Erfindung.

Bevorzugt weist der Signalgeber eine digitale Architektur zum Erzeugen digitaler Überwachungsdaten auf. Bei dieser Ausgestaltung umfasst die elektronische drahtgebundene Schnittstelle der erfindungsgemäßen Schaltungsanordnung einen digitalen Übertragungskanal. Mit einem digitalen Übertragungskanal lassen sich Überwachungsdaten störungsfrei und in leicht zu prozessierender Form übertragen.

In einer besonders praktikablen Ausgestaltung der erfindungsgemäßen Schaltungsanordnung weist diese eine digitale Architektur zur Verarbeitung und Übertragung der empfangenen Überwachungsdaten auf. Eine digitale Architektur erlaubt die Verwendung von digitalen Standardbauelementen, die entsprechend flexibel programmierbar sind.

In einer Variante der erfindungsgemäßen Schaltungsanordnung weist diese eine zentrale Prozesseinheit zum Durchführen zumindest einer der folgenden Prozesse auf:
- Verarbeiten der von dem Signalgeber empfangenen Überwachungsdaten,
- Übermitteln von verarbeiteten Überwachungsdaten an die Funkeinheit,
- Verarbeiten von Empfangsdaten, vorzugsweise Empfangsbestätigungsdaten, welcher von der Funkeinheit übermittelt wurden,
- Übermitteln von auf den Empfangsdaten basierenden Wartungsbefehlen an den Signalgeber.

Das Verarbeiten der von dem Signalgeber übermittelten Überwachungsdaten kann zum Beispiel eine Auswertung der Überwachungsdaten umfassen, wobei der technische Zustand einzelner überwachter Bauelemente des Signalgebers ermittelt wird. Entsprechend ausgewertete Überwachungsdaten bzw. verarbeitete Überwachungsdaten können dann weiter an die Funkeinheit übermittelt werden.

Mit Hilfe der Wartungsbefehle können ferngesteuert Wartungsoperation in dem Signalgeber durchgeführt werden. Beispielsweise können einzelne Bauelemente oder der gesamte Signalgeber ausgeschaltet werden, falls ermittelt wurde, dass die Gefahr besteht, dass in Kürze ein technischer Defekt auftreten wird. Auf diese Weise können Wartungsprozesse in dem Signalgeber zentral gesteuert per Funk über die neue Schaltungsanordnung quasi ferngesteuert ausgelöst werden.

Vorteilhaft kann die zentrale Prozesseinheit für die Verarbeitung unterschiedlicher Arten von Daten genutzt werden, so dass der Aufbau der Schaltungsanordnung vereinfacht ist und die Schaltungsanordnung trotzdem für verschiedene Funktionen eingesetzt werden kann.

In einer speziellen Variante der erfindungsgemäßen Schaltungsanordnung umfassen die Empfangsdaten eine Bestätigungsmitteilung, dass die Überwachungsdaten von der externen Wartungseinrichtung empfangen wurden. Vorteilhaft kann mit Hilfe der Bestätigungsdaten dem Signalgeber angezeigt werden, dass die von dem Signalgeber erzeugten Überwachungsdaten von einer externen Wartungseinrichtung empfangen wurden und mithin aktuell eine Überwachung der Funktionsfähigkeit des Signalgebers stattfindet. Beispielsweise kann der Signalgeber bei einer mangelnden Überwachung seinen Betrieb einstellen, um einen überwachungsfreien Betrieb zu verhindern. Mithin wird die Betriebssicherheit des Signalgebers erhöht.

In einer Ausgestaltung der erfindungsgemäßen Schaltungsanordnung umfasst ein Wartungsbefehl das Ausschalten eines Funktionselements des Signalgebers. Beispielsweise kann bei dem Vorliegen eines Defekts eines Funktionselements dieses Funktionselement vorsorglich ausgeschaltet werden, um eine Fehlfunktion des Signalgebers zu vermeiden.

In einer vorteilhaften Ausgestaltung der erfindungsgemäßen Schaltungsanordnung weist diese einen nichtflüchtigen elektronischen Datenspeicher, vorzugsweise einen MRAM-Speicher, auf. In dem nichtflüchtigen elektronischen Datenspeicher können Überwachungsdaten zwischen zwei Funkübertragungsvorgängen zwischengespeichert werden. Vorteilhaft können Kapazitätsengpässe bei der Übermittlung von Überwachungsdaten per Funk beherrscht werden, ohne dass ein Teil der Überwachungsdaten verloren geht. Sind mit der erfindungsgemäßen Schaltungsanordnung mehrere Signalgeber verbunden, so kann durch Zwischenspeichern von Überwachungsdaten in dem nichtflüchtigen Datenspeicher eine Kollision von zu übertragen Daten von verschiedenen Signalgebern bei der Funkübertragung vermieden werden.

Mithin ist der nichtflüchtige Datenspeicher dazu eingerichtet, Überwachungsdaten von dem Signalgeber bzw. den Signalgebern zwischenzuspeichern, bis diese von der Funkeinheit an die externe Wartungseinrichtung übertragen werden.

In einer Variante der erfindungsgemäßen Schaltungsanordnung ist die elektronische drahtgebundene Schnittstelle dazu eingerichtet, kontinuierlich aktuelle Überwachungsdaten bezüglich des aktuellen Zustands der zu überwachenden Funktionseinheiten des Signalgebers zu empfangen. Zudem ist die Funkeinheit dazu eingerichtet, die aktuellen Überwachungsdaten zeitnah an die externe Signalgeber-Wartungseinrichtung zu übermitteln. Als zeitnahe Übertragung der Überwachungsdaten soll in diesem Zusammenhang verstanden werden, dass die Übertragung eines Satzes von Überwachungsdaten von einem Signalgeber zeitlich vor dem Empfang von zu einem späteren Zeitpunkt erzeugten Überwachungsdaten desselben Signalgebers durch die erfindungsgemäße Schaltungsanordnung weitergeleitet werden.

Bei dieser Ausgestaltung ist es möglich, eine ständige Überwachung des Funktionszustands des Signalgebers zu realisieren. Mithin kann auf Basis der ständig eintreffenden Überwachungsdaten ein sich anbahnender Defekt in dem Signalgeber frühzeitig vorhergesehen werden und es können rechtzeitig Gegenmaßnahmen, beispielsweise Wartungsmaßnahmen, ergriffen werden, um einen Ausfall eines Signalgebers zu verhindern.

Die erfindungsgemäße Schaltungsanordnung kann bevorzugt auf einer Steckkarte ausgebildet sein, die durch Aufstecken auf eine Platine des Signalgebers mit diesem elektrisch verbindbar ist. In dieser Ausgestaltung lässt sich eine vorhandene Signalgebereinheit besonders einfach und schnell aufrüsten. Auch im Fall eines Defekts kann die erfindungsgemäße Schaltungsanordnung schnell und einfach ausgetauscht werden, ohne dass sonstige Bauelemente der Signalgebereinheit bzw. Bauelemente des Signalgebers davon betroffen sind. Bei dem Einsatz einer Aufsteckkarte als Basis für die erfindungsgemäße Schaltungsanordnung fällt der Aufwand für eine Verdrahtung der Schaltungsanordnung mit dem Signalgeber fort. Mithin vereinfacht sich der Einbau der Schaltungsanordnung und wird kostengünstiger.

Die Eingangsschnittstelle der erfindungsgemäßen Schaltungsanordnung kann eine zusätzliche Isolationsschaltung zur Isolation der erfindungsgemäßen Schaltungsanordnung von dem Signalgeber aufweisen. Damit kann erreicht werden, dass sich ein Ausfall eines elektronischen Bauteils der Schaltungsanordnung nicht negativ auf die Verfügbarkeit des Signalgebers auswirkt. Eine solche Isolation kann in Abhängigkeit von dem zu isolierenden Signal zum Beispiel eine Sicherung, einen Transistor, einen Operationsverstärker, einen hochohmigen Widerstand oder eine Kombination aus den genannten Bauelementen umfassen.

Die Erfindung wird im Folgenden unter Hinweis auf die beigefügten Figuren anhand von Ausführungsbeispielen noch einmal näher erläutert. Es zeigen:
- FIG 1: eine Schaltungsanordnung zur Rückübertragung von Überwachungsdaten eines sich selbst überwachenden Signalgebers einer Lichtsignalanlage gemäß einem Ausführungsbeispiel der Erfindung,
- FIG 2: eine Signalgebereinheit mit einer Schaltungsanordnung gemäß einem Ausführungsbeispiel der Erfindung,
- FIG 3: eine schematische Darstellung einer Lichtsignalanlage gemäß einem Ausführungsbeispiel der Erfindung,
- FIG 4: ein Flussdiagramm, welches ein Verfahren zum Überwachen einer Signalgebereinheit gemäß einem Ausführungsbeispiel der Erfindung veranschaulicht.

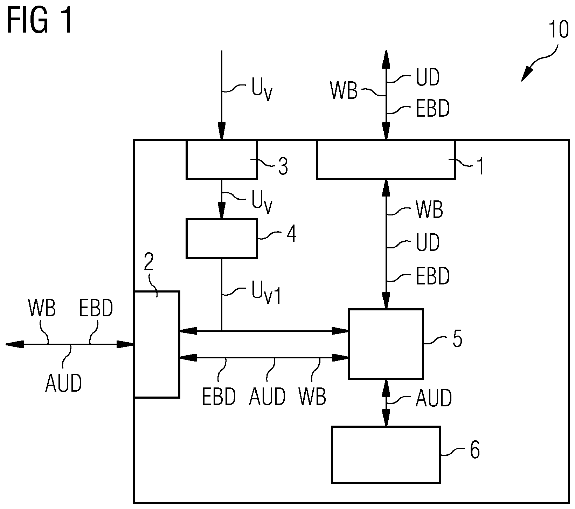

FIG 1 zeigt eine Schaltungsanordnung 10 zur Rückübertragung von Überwachungsdaten UD eines sich selbst überwachenden Signalgebers einer Lichtsignalanlage. Die Schaltungsanordnung 10 umfasst eine elektronische drahtgebundene Schnittstelle 1. Die elektronische drahtgebundene Schnittstelle 1 ist dazu eingerichtet, Überwachungsdaten UD von der Signalgebereinheit (in FIG 1 nicht gezeigt) zu empfangen.

Die Schaltungsanordnung 10 umfasst weiterhin eine Funkeinheit 2. Die Funkeinheit 2 ist dazu eingerichtet, empfangene und verarbeitete Überwachungsdaten AUD per Funk an eine externe Signalgeber-Wartungseinrichtung (in FIG 1 nicht gezeigt), auch als zentrale Wartungseinrichtung bezeichnet, zu übermitteln. Teil der Schaltungsanordnung 10 ist auch ein Versorgungsspannungseingang 3, auch Spannungsversorgungsschnittstelle genannt, welche von dem Signalgeber eine Versorgungsspannung U_{V} bezieht, mit der die Schaltungsanordnung mit elektrischer Energie versorgt wird.

Die Versorgungsspannungsschnittstelle 3 ist mit einer wiederaufladbaren Energiespeichereinheit 4 elektrisch verbunden. Die Energiespeichereinheit 4 dient dazu, ein zu starkes Schwanken der Stromaufnahme des Signalgebers bei einem Betrieb der Funkeinheit 2 zu vermeiden und die Funkeinheit 2 und eine zentrale Prozesseinheit 5 mit einer konstanten elektrischen Spannung Uᵥ₁ zu versorgen.

Die zentrale Prozessoreinheit 5 ist dazu eingerichtet, verschiedene Arten von Daten, beispielsweise die Überwachungsdaten UD, aber auch Empfangsdaten von der Funkeinheit 2, beispielsweise Empfangsbestätigungsdaten EBD von der zentralen Wartungseinrichtung oder Wartungsbefehle WB von der zentralen Wartungseinrichtung zu verarbeiten und weiterzuleiten. Teil der Schaltungsanordnung 10 ist auch ein nichtflüchtiger Datenspeicher 6, in diesem konkreten Ausführungsbeispiel ein MRAM-Speicher, welcher dazu dient, von der zentralen Prozesseinheit 5 ausgewertete Überwachungsdaten AUD zwischenzuspeichern und in regelmäßigen Abständen diese zwischengespeicherten Daten AUD über die zentrale Prozesseinheit 5 an die Funkeinheit 2 abzugeben, wenn diese eine Statusmeldung an die zentrale Wartungseinrichtung ausgibt. Umgekehrt werden Empfangsbestätigungsmeldungen EBD von der zentralen Wartungseinrichtung per Funk an die Funkeinheit 2 übermittelt und von dort über die zentrale Prozesseinheit 5 an die elektronische drahtgebundene Schnittstelle 1 weitergeleitet.

Von dort werden die Empfangsbestätigungsmeldungen EBD an den Signalgeber weitergeleitet, welcher aus Sicherheitsgründen seinen Betrieb nur fortführt, wenn eine solche Empfangsbestätigungsmeldung EBD regelmäßig eintrifft. Eine weitere Art von zu übertragen Daten sind Wartungsbefehlsdaten WB, welche von der zentralen Wartungseinrichtung per Funk an die Funkeinheit 2 übermittelt werden. Von dort werden die Wartungsbefehlsdaten WB über die zentrale Prozesseinheit 5 an die elektronische drahtgebundene Schnittstelle 1 übertragen und von dort an den Signalgeber weitergeleitet. Auf Basis der Wartungsbefehlsdaten WB führt der Signalgeber Wartungsoperationen, wie zum Beispiel ein Ausschalten von Beleuchtungseinheiten, deren Alterungsprozess eine vorbestimmte Schwelle überschritten hat, aus.

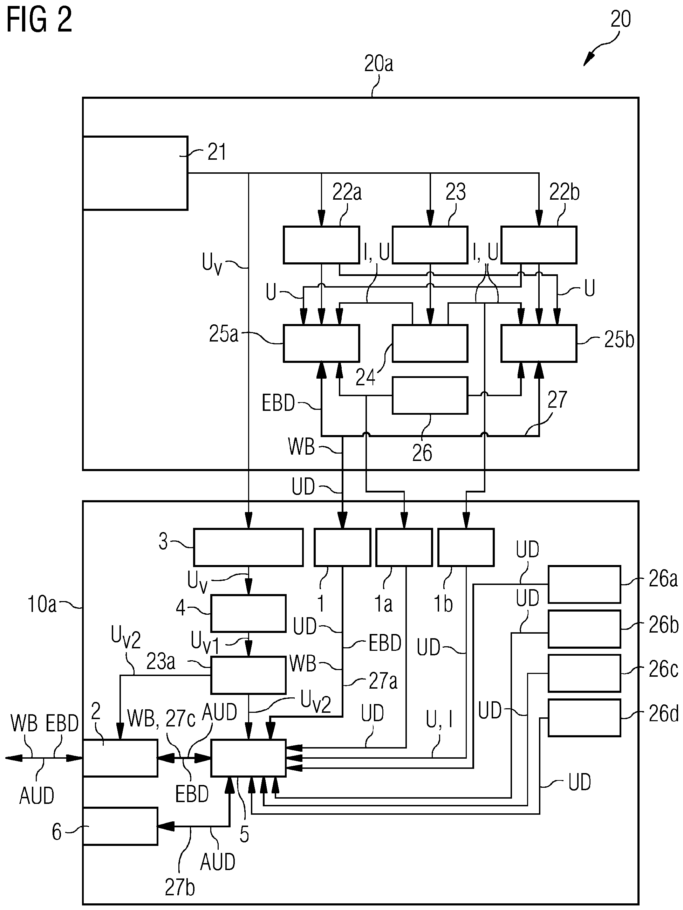

In FIG 2 ist eine Signalgebereinheit 20 mit einer Schaltungsanordnung 10a zur Rückübertragung von Überwachungsdaten UD eines sich selbst überwachenden Signalgebers einer Lichtsignalanlage und eine Signalgeberplatine 20a, kurz als Signalgeber bezeichnet, gezeigt. Der Signalgeber 20a umfasst eine Kontaktklemme 21, mit der eine Versorgungsspannung U_{V} bezogen wird. Wie bereits erwähnt, steht die Versorgungsspannung nicht nur dem Signalgeber 20a, sondern auch über eine elektrische Verbindung mit einer Versorgungsspannungsschnittstelle 3 der Schaltungsanordnung 10a den Funktionselementen der Schaltungsanordnung 10a zur Verfügung. Die Versorgungsspannungsschnittstelle 3 umfasst in dem in FIG 2 gezeigten Ausführungsbeispiel eine Strombegrenzungsfunktion, um die durch die Schaltungsanordnung 10a bedingte Stromaufnahme zu begrenzen bzw. zu glätten.

Der Signalgeber 20a umfasst außerdem auch ungeregelte Spannungsstabilisatoren 22a, 22b, welche als Längsregler ausgebildet sind. Die beiden Spannungsstabilisatoren 22a, 22b sind mit der Kontaktklemme 21 und jeweils mit einer zentralen Prozesseinheit 25a, 25b elektrisch verbunden. Teil des Signalgebers 20a ist auch eine Gleichspannungswandlereinheit 23, deren Eingang mit der Kontaktklemme 21 und deren Ausgang mit einer Leuchtdiode 24 elektrisch verbunden sind. Die Leuchtdiode 24 bildet das Leuchtelement des Signalgebers 20a, mit dem Leuchtsignale angezeigt werden. Der Signalgeber 20a umfasst zudem einen optischen Sensor 26, der über Datenleitungen mit den beiden zentralen Prozesseinheiten 25a, 25b elektrisch verbunden ist. Die doppelte Ausführung der zentralen Prozesseinheiten 25a, 25b ermöglicht eine Redundanz bei der Ansteuerung und Überwachung der Leuchteinheit 24, wodurch eine höhere Zuverlässigkeit erreicht wird. Die beiden zentralen Prozesseinheiten sind zusätzlich über einen digitalen Bus 27 miteinander verbunden. Der digitale Bus 27 ist zusätzlich über eine Eingangsschnittstelle 1 der Schaltungsanordnung 10a mit dieser verbunden und ermöglicht so eine digitale Kommunikation zwischen dem Signalgeber 20a und der Schaltungsanordnung 10a.

Die Schaltungsanordnung 10a umfasst zudem ebenso wie die in FIG 1 gezeigte Schaltungsanordnung 10, eine Funkeinheit 2, einen Versorgungsspannungseingang 3 mit der bereits genannten Strombegrenzungsfunktion, eine wiederaufladbare Energiespeichereinheit 4, eine zentrale Prozesseinheit 5 und einen nichtflüchtigen Datenspeicher 6. Die wiederaufladbare Energiespeichereinheit 4, beispielsweise ein Kondensator, wird während einer Phase, während der keine Funkübertragung stattfindet, über die Kontaktklemme 21 und den Versorgungsspannungseingang 3 aufgeladen. Während einer Phase, während der eine Funkübertragung durch die Funkeinheit 2 stattfindet, gibt die wiederaufladbare Energiespeichereinheit 4 dann ihre elektrische Energie an die Stromverbraucher der Schaltungsanordnung 10a, insbesondere die Funkeinheit 2 ab, so dass ein erhöhter Energieverbrauch der Funkeinheit 2 gedeckt werden kann. Da für eine hinreichende Reichweite die Stromaufnahme der Funkeinheit üblicherweise deutlich größer ist als der durch die Strombegrenzung erlaubte Maximalwert, wäre ohne die wiederaufladbare Energiespeichereinheit 4 ein solcher Funkbetrieb nicht oder nur sehr eingeschränkt möglich.

In der Schaltungsanordnung 10a sind digitale Busleitungen 27a, 27b, 27c zwischen der Eingangsschnittstelle 1 und der zentralen Prozesseinheit 5, zwischen der zentralen Prozesseinheit 5 und der nichtflüchtigen Datenspeichereinheit 6 und zwischen der zentralen Prozesseinheit 5 und der Funkeinheit 2 ausgebildet. Zusätzlich umfasst die Schaltungsanordnung 10a eine Spannungswandlungseinheit 23a, welche eine von der Energiespeichereinheit 4 zur Verfügung gestellte elektrische Spannung Uᵥ₁ auf eine für die zentrale Prozesseinheit 5 und die Funkeinheit 2 geeignete elektrische Spannung U_{V2} transformiert. Die der Funkeinheit 2 zur Verfügung gestellte elektrische Spannung kann auch einen anderen Wert aufweisen als die der zentralen Prozesseinheit 5 zur Verfügung gestellte elektrische Spannung, falls die beiden Bauelemente, was die Höhe der jeweiligen Eingangsspannung betrifft, unterschiedliche Spezifikationen haben.

Ebenso wie bei der in FIG 1 gezeigten Schaltungsanordnung 10 ist die in FIG 2 gezeigte zentrale Prozessoreinheit 5 dazu eingerichtet, verschiedene Arten von Daten, beispielsweise die Überwachungsdaten UD, aber auch Empfangsdaten von der Funkeinheit 2, beispielsweise Empfangsbestätigungsdaten EBD von der zentralen Wartungseinrichtung oder Wartungsbefehle WB von der zentralen Wartungseinrichtung zu verarbeiten und weiterzuleiten. Die nichtflüchtige Datenspeichereinheit 6, in diesem konkreten Ausführungsbeispiel ein MRAM-Speicher, dient dazu, von der zentralen Prozesseinheit 5 ausgewertete Überwachungsdaten AUD zwischenzuspeichern und in regelmäßigen Abständen diese zwischengespeicherten Daten AUD über die zentrale Prozesseinheit 5 an die Funkeinheit 2 abzugeben, wenn diese eine Statusmeldung umfassend die verarbeiteten Überwachungsdaten AUD an die zentrale Wartungseinrichtung ausgibt. Umgekehrt werden Empfangsbestätigungsmeldungen EBD von der zentralen Wartungseinrichtung per Funk an die Funkeinheit 2 übermittelt und von dort über die zentrale Prozesseinheit 5 an die elektronische drahtgebundene Schnittstelle 1 weitergeleitet.

Von dort werden die Empfangsbestätigungsmeldungen EBD an den Signalgeber 20a weitergeleitet, welcher aus Sicherheitsgründen seinen Betrieb nur fortführt, wenn eine solche Empfangsbestätigungsmeldung EBD regelmäßig eintrifft. Eine weitere Art von zu übertragen Daten sind, wie im Zusammenhang mit FIG 1 erwähnt, Wartungsbefehlsdaten WB, welche von der zentralen Wartungseinrichtung per Funk an die Funkeinheit 2 übermittelt werden. Von dort werden die Wartungsbefehlsdaten WB über die zentrale Prozesseinheit 5 an die elektronische drahtgebundene Schnittstelle 1 übertragen und von dort an den Signalgeber weitergeleitet. Auf Basis der Wartungsbefehlsdaten WB führt der Signalgeber 20a Wartungsoperationen, wie zum Beispiel ein Ausschalten der Leuchteinheit 24, deren Alterungsprozess eine vorbestimmte Schwelle überschritten hat, aus.

Überdies umfasst die Schaltungsanordnung 10a auch eine zusätzliche digitale Schnittstelle 1a, mit der digitale Daten UD des optischen Sensors 26 direkt von dem optischen Sensor 26 empfangen und an die zentrale Prozesseinheit 5 weitergeleitet werden können.

Außerdem weist die Schaltungsanordnung 10a noch einen analogen Eingang 1b auf, mit dem elektrische Spannungswerte U und Stromstärkewerte I der Leuchteinheit 24 des Signalgebers 20a direkt gemessen und an die zentrale Prozesseinheit 5 der Schaltungsanordnung 10a weitergeleitet werden können.

Die zentrale Prozesseinheit 5 der Schaltungsanordnung 10a kann über weitere Datenschnittstellen noch mit zusätzlichen Sensoren 26a, 26b, 26c, 26d, welche bei dem in FIG 2 gezeigten Ausführungsbeispiel Teil der Schaltungsanordnung 10a sind, elektrisch verbunden sein. Beispielsweise ist ein erster Sensor 26a als RGB-Sensor zur Farblicht-Detektion ausgebildet, ist ein zweiter Sensor 26b als Temperatursensor ausgebildet, ist ein dritter Sensor 26c als Helligkeitssensor 26c ausgebildet und ist ein vierter Sensor 26d als Lagesensor ausgebildet. Die von diesen Sensoren 26a, 26b, 26c, 26d erfassten Sensordaten UD werden von der zentralen Prozesseinheit 5 bei der Auswertung der Überwachungsdaten UD ebenfalls mitberücksichtigt und erlauben eine noch exaktere Überwachung der Funktionsfähigkeit des Signalgebers 20a.

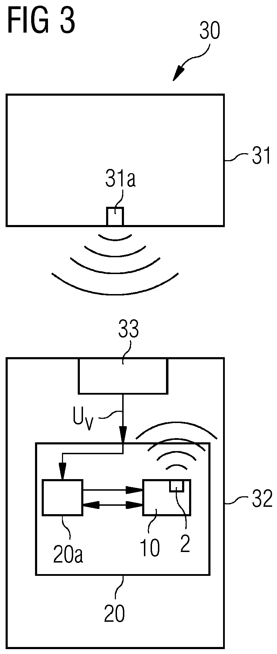

In FIG 3 ist eine Anordnung 30, umfassend eine zentrale Wartungseinrichtung 31 und eine Lichtsignalanlage 32 gemäß einem Ausführungsbeispiel der Erfindung veranschaulicht. Die zentrale Wartungseinrichtung 31 umfasst eine Kommunikationseinheit 31a, welche dazu eingerichtet ist, per Funk mit der Schaltungsanordnung 10 der Lichtsignalanlage 32 zu kommunizieren. Die Lichtsignalanlage 32 umfasst eine zentrale Steuerungseinheit 33 mit einer Spannungsquelle und eine Signalgebereinheit 20 mit einem Signalgeber 20a und einer Schaltungsanordnung 10 gemäß einem Ausführungsbeispiel der Erfindung. Mit der zentralen Steuerungseinheit 33 wird die Lichtzeichenabfolge des Signalgebers 20a gesteuert und von der Steuerungseinheit 33 wird der Signalgeber 20a auch mit einer elektrischen Gleichspannung Uᵥ versorgt. Die Schaltungsanordnung 10 kommuniziert über ihre Funkeinheit 2 mit der zentralen Wartungseinrichtung 31 bzw. der Kommunikationseinheit 31a der zentralen Wartungseinrichtung 31 auf die im Zusammenhang mit FIG 1 und 2 beschriebene Art und Weise. Die zentrale Wartungseinrichtung 31 kann auch in die zentrale Steuerungseinheit 33 integriert sein. Die Schaltungsanordnung 10 kommuniziert bei dieser Variante mit der zentralen Steuerungseinheit 33 über Funk.

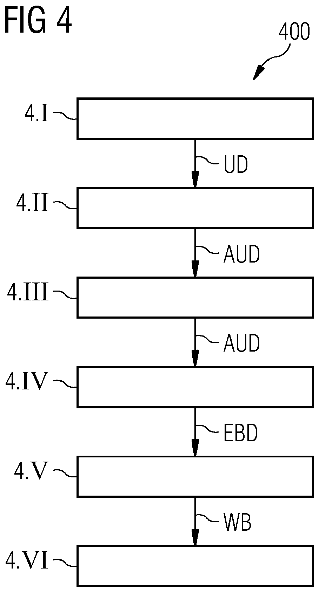

In FIG 4 ist ein Flussdiagramm 400 gezeigt, welches ein Verfahren zum Überwachen und Warten einer Signalgebereinheit 20 (siehe FIG 2, FIG 3) mit Verfahrensschritten zum Rückübertragen von Überwachungsdaten eines sich selbst überwachenden Signalgebers 20a einer Lichtsignalanlage 32 gemäß einem Ausführungsbeispiel der Erfindung veranschaulicht. Bei dem Schritt 4.I werden von der in FIG 1 bis FIG 3 beschriebenen Schaltungsanordnung 10, 10a drahtgebunden Überwachungsdaten UD von der Signalgebereinheit 20 empfangen. Bei dem Schritt 4.II werden die erfassten Überwachungsdaten UD von einer zentralen Prozesseinheit 5 der Schaltungsanordnung 10, 10a ausgewertet. Bei dem Schritt 4.III werden die ausgewerteten Überwachungsdaten AUD per Funk an eine externe Signalgeber-Wartungseinrichtung 31 (siehe FIG 3) übermittelt. Bei dem Schritt 4.IV wird anschließend ein Bestätigungssignal EBD von der externen Signalgeber-Wartungseinrichtung 31 an die Schaltungsanordnung 10, 10a per Funk zurückübermittelt. Dieses Bestätigungssignal EBD wird anschließend von der Schaltungsanordnung 10, 10a an den Signalgeber 20a drahtgebunden weitergeleitet. Auf Basis dieses Bestätigungssignals EBD kann der Signalgeber 20a verifizieren, dass eine Überwachung seiner korrekten Funktion stattfindet, und er den Betrieb sicher weiterführen kann. Bei dem Schritt 4.V wird seitens der externen Signalgeber-Wartungseinrichtung 31 ein Wartebefehlssignal WB an einen Wartungsdienst übermittelt. Dies erfolgt für den Fall, dass auf Basis der ausgewerteten Überwachungsdaten AUD von der zentralen Wartungseinrichtung 31 ermittelt wurde, dass ein oder mehrere Funktionselemente des Signalgebers 20a bald ausfallen könnten. Bei dem Schritt 4.VI führt der Wartungsdienst dann die befohlene Wartung an dem Signalgeber 20a durch. Auf diese Weise wird ein Ausfall einer entsprechenden Funktionseinheit vor dem Wartungsvorgang vermieden.

Es wird abschließend noch einmal darauf hingewiesen, dass es sich bei den vorbeschriebenen Vorrichtungen und Verfahren lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. So wurden das Verfahren und die Schaltungsanordnung in erster Linie anhand einer Lichtsignalanlage zur Verkehrsregelung erläutert. Die Erfindung ist jedoch nicht auf eine Anwendung im Verkehrsbereich beschränkt, sondern die Erfindung kann auch grundsätzlich auf andere Signalsysteme, wie zum Beispiel Warnsysteme oder dergleichen, angewandt werden. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Schaltungsanordnung (10, 10a) zur Rückübertragung von Überwachungsdaten eines sich selbst überwachenden Signalgebers (20a) einer Lichtsignalanlage (32), aufweisend:
- eine elektronische drahtgebundene Schnittstelle (1, 1a, 1b) zu dem Signalgeber (20a) zum Empfangen von Überwachungsdaten (UD), betreffend zu überwachende Funktionseinheiten (24) des Signalgebers (20a), von dem Signalgeber (20a),
- eine Funkeinheit (2) zur Übermittlung der Überwachungsdaten (UD, AUD) an eine externe Signalgeber-Wartungseinrichtung (31),
- eine Spannungsversorgungsschnittstelle (3), welche mit der elektrischen Spannungsversorgung (21) des Signalgebers (20a) elektrisch verbunden ist,
- einen wiederaufladbaren elektrischen Energiespeicher (6) zur Energieversorgung der Funkeinheit (2) während eines Sende-/ Empfangsbetriebs der Funkeinheit (2),
**dadurch gekennzeichnet, dass** die Schaltungsanordnung (10, 10a) ferner Folgendes umfasst:
- eine Strombegrenzungseinheit (23a), welche dazu eingerichtet ist, einen über die Spannungsversorgungsschnittstelle (3) bezogenen elektrischen Strom auf einen vorbestimmten Maximalwert zu beschränken, derart, dass auf Basis der Stromaufnahme des Signalgebers (20a) sicher detektierbar ist, auch bei einem aktiven Betrieb der Funkeinheit, ob sich der Signalgeber in einem Einschaltzustand oder einem Ausschaltzustand befindet.

2. Schaltungsanordnung nach Anspruch 1, wobei der Signalgeber (20a) eine digitale Architektur zum Erzeugen digitaler Überwachungsdaten (UD) aufweist und die elektronische drahtgebundene Schnittstelle (1, 1a) einen digitalen Übertragungskanal aufweist.

3. Schaltungsanordnung nach Anspruch 2, aufweisend eine digitale Architektur zur Verarbeitung und Übertragung der empfangenen Überwachungsdaten (UD).

4. Schaltungsanordnung nach einem der vorstehenden Ansprüche, aufweisend eine zentrale Prozesseinheit (5) zum Durchführen zumindest eines der folgenden Prozesse:
- Verarbeiten der von dem Signalgeber (20a) empfangenen Überwachungsdaten (UD),
- Übermitteln von verarbeiteten Überwachungsdaten (AUD) an die Funkeinheit (2),
- Verarbeiten von Empfangsdaten (WB, EBD), vorzugsweise Empfangsbestätigungsdaten (WB) von der externen Signalgeber-Wartungseinrichtung (31),
- Übermitteln von auf den Empfangsdaten (WB, EBD) basierenden Wartungsbefehlen (WB) an den Signalgeber (20a).

5. Schaltungsanordnung nach Anspruch 4, wobei die Empfangsdaten (EBD) eine Bestätigungsmitteilung umfassen, dass die Überwachungsdaten (AUD) von der externen Signalgeber-Wartungseinrichtung (31) empfangen wurden.

6. Schaltungsanordnung nach Anspruch 4 oder 5, wobei ein Wartungsbefehl (WB) das Ausschalten eines Funktionselements (24) des Signalgebers (20a) umfasst.

7. Schaltungsanordnung nach einem der Ansprüche 2 bis 6, aufweisend einen nichtflüchtigen Datenspeicher (6), vorzugsweise einen MRAM-Speicher.

8. Schaltungsanordnung nach Anspruch 7, wobei der nichtflüchtige Datenspeicher (6) dazu eingerichtet ist, Überwachungsdaten (AUD) von dem Signalgeber (20a) zwischenzuspeichern, bis diese von der Funkeinheit (2) an die externe Signalgeber-Wartungseinrichtung (31) übertragen werden.

9. Schaltungsanordnung nach einem der vorstehenden Ansprüche, wobei
- die elektronische drahtgebundene Schnittstelle (1, 1a, 1b) dazu eingerichtet ist, kontinuierlich aktuelle Überwachungsdaten (UD) bezüglich des aktuellen Zustands der zu überwachenden Funktionseinheiten (24) des Signalgebers (20a) zu empfangen,
- und die Funkeinheit (2) dazu eingerichtet ist, die aktuellen Überwachungsdaten (AUD) zeitnah an die externe Signalgeber-Wartungseinrichtung (31) zu übermitteln.

10. Schaltungsanordnung nach einem der vorstehenden Ansprüche, welche als Steckkarte ausgebildet ist, die durch Aufstecken auf eine Platine des Signalgebers (20a) mit diesem elektrisch verbindbar ist.

11. Signalgebereinheit (20), aufweisend:
- eine elektrische Spannungsversorgungsschnittstelle (21),
- mindestens einen Signalgeber (20a),
- eine Überwachungsschaltung (25a, 25b) zur Überwachung der Funktionseinheiten (24) des mindestens einen Signalgebers (20a) und
- eine Schaltungsanordnung (10) nach einem der vorstehenden Ansprüche.

12. Lichtsignalanlage (32), aufweisend:
- mindestens einen Signalgebereinheit (20),
- eine zentrale Steuerungseinheit (33) zur Ansteuerung der mindestens einen Signalgebereinheit (20),
- eine Schaltungsanordnung (10) nach einem der Ansprüche 1 bis 10.

13. Verfahren zum Rückübertragen von Überwachungsdaten (UD) eines sich selbst überwachenden Signalgebers (20a) einer Lichtsignalanlage (32), aufweisend die Schritte:
- drahtgebundenes Empfangen von Überwachungsdaten (UD), betreffend zu überwachende Funktionseinheiten (24) des Signalgebers (20a), von dem Signalgeber (20a), durch eine Schaltungsanordnung (10, 10a) über eine elektronische drahtgebundene Schnittstelle (1, 1a, 1b),
- Übermitteln der Überwachungsdaten (AUD) an eine externe Signalgeber-Wartungseinrichtung (31) durch eine Funkeinheit (2) der Schaltungsanordnung (10, 10a),
- Versorgen der Schaltungsanordnung (10, 10a) durch eine Spannungsversorgungsschnittstelle (3), welche mit der elektrischen Spannungsversorgung (21) des Signalgebers (20a) elektrisch verbunden ist,
- Beschränken eines über die Spannungsversorgungsschnittstelle (3) bezogenen elektrischen Stroms auf einen vorbestimmten Maximalwert, derart, dass auf Basis der Stromaufnahme des Signalgebers (20a) sicher detektierbar ist, auch bei einem aktiven Betrieb der Funkeinheit, ob sich der Signalgeber in einem Einschaltzustand oder einem Ausschaltzustand befindet, und
- Versorgen der Funkeinheit (2) durch einen wiederaufladbaren elektrischen Energiespeicher (6) mit elektrischer Energie während eines Sende-/Empfangsbetriebs der Funkeinheit (2).

## Claims

1. Circuit arrangement (10, 10a) for the return transmission of monitoring data of a self-monitoring signal generator (20a) of a light signal installation (32), comprising:
- an electronic wired interface (1, 1a, 1b) to the signal generator (20a) for receiving monitoring data (UD), regarding functional units (24) of the signal generator (20a) that are to be monitored, from the signal generator (20a),
- a radio unit (2) for transmission of the monitoring data (UD, AUD) to an external signal generator maintenance apparatus (31),
- a voltage supply interface (3), which is electrically connected to the electrical voltage supply (21) of the signal generator (20a),
- a rechargeable electrical energy store (6) for supplying energy to the radio unit (2) during a transmission/reception mode of the radio unit (2),
**characterized in that** the circuit arrangement (10, 10a) also comprises the following:
- a current limiting unit (23a) that is configured to limit an electric current acquired via the voltage supply interface (3) to a predetermined maximum value in such a way that, on the basis of the current consumption of the signal generator (20a), it is possible to reliably detect, even during active operation of the radio unit, whether the signal generator is in a switched-on state or a switched-off state.

2. Circuit arrangement according to Claim 1, wherein the signal generator (20a) has a digital architecture for generating digital monitoring data (UD) and the electronic wired interface (1, 1a) has a digital transmission channel.

3. Circuit arrangement according to Claim 2, comprising a digital architecture for processing and transmitting the received monitoring data (UD).

4. Circuit arrangement according to one of the preceding claims, comprising a central process unit (5) for carrying out at least one of the following processes:
- processing the monitoring data (UD) received from the signal generator (20a),
- transmitting processed monitoring data (AUD) to the radio unit (2),
- processing reception data (WB, EBD), preferably reception confirmation data (WB), from the external signal generator maintenance apparatus (31),
- transmitting maintenance instructions (WB), based on the reception data (WB, EBD), to the signal generator (20a) .

5. Circuit arrangement according to Claim 4, wherein the reception data (EBD) comprise a confirmation message that the monitoring data (AUD) have been received by the external signal generator maintenance apparatus (31).

6. Circuit arrangement according to Claim 4 or 5, wherein a maintenance instruction (WB) comprises the switching-off of a functional element (24) of the signal generator (20a).

7. Circuit arrangement according to one of Claims 2 to 6, comprising a non-volatile data memory (6), preferably a MRAM memory.

8. Circuit arrangement according to Claim 7, wherein the non-volatile data memory (6) is configured to buffer-store monitoring data (AUD) from the signal generator (20a) until they are transmitted from the radio unit (2) to the external signal generator maintenance apparatus (31) .

9. Circuit arrangement according to one of the preceding claims, wherein
- the electronic wired interface (1, 1a, 1b) is configured to continuously receive present monitoring data (UD) relating to the present state of the functional units (24) of the signal generator (20a) that are to be monitored,
- and the radio unit (2) is configured to transmit the present monitoring data (AUD) promptly to the external signal generator maintenance apparatus (31).

10. Circuit arrangement according to one of the preceding claims, which is in the form of a plug-in card that, as a result of being plugged onto a circuit board of the sensor generator (20a), is able to be electrically connected to said signal generator.

11. Signal generator unit (20), comprising:
- an electrical voltage supply interface (21),
- at least one signal generator (20a),
- a monitoring circuit (25a, 25b) for monitoring the functional units (24) of the at least one signal generator (20a), and
- a circuit arrangement (10) according to one of the preceding claims.

12. Light signal installation (32), comprising:
- at least one signal generator unit (20),
- a central control unit (33) for actuating the at least one signal generator unit (20),
- a circuit arrangement (10) according to one of Claims 1 to 10.

13. Method for the return transmission of monitoring data (UD) of a self-monitoring signal generator (20a) of a light signal installation (32), comprising the steps of:
- a circuit arrangement (10, 10a) receiving, in a wired manner, monitoring data (UD), regarding functional units (24) of the signal generator (20a) that are to be monitored, from the signal generator (20a) via an electronic wired interface (1, 1a, 1b),
- a radio unit (2) of the circuit arrangement (10, 10a) transmitting the monitoring data (AUD) to an external signal generator maintenance apparatus (31),
- a voltage supply interface (3), which is electrically connected to the electrical voltage supply (21) of the signal generator (20a), supplying power to the circuit arrangement (10, 10a),
- limiting an electric current acquired via the voltage supply interface (3) to a predetermined maximum value in such a way that, on the basis of the current consumption of the signal generator (20a), it is possible to reliably detect, even during active operation of the radio unit, whether the signal generator is in a switched-on state or a switched-off state, and
- a rechargeable electrical energy store (6) supplying electrical energy to the radio unit (2) during a transmission/reception mode of the radio unit (2).

## Revendications

1. Agencement de circuit (10, 10a) permettant de retransmettre des données de surveillance d'un émetteur de signaux (20a) à autosurveillance d'une installation de signalisation lumineuse (32), présentant :
- une interface filaire électronique (1, 1a, 1b) avec l'émetteur de signaux (20a) pour recevoir de l'émetteur de signaux (20a) des données de surveillance (UD) concernant des unités fonctionnelles (24) à surveiller de l'émetteur de signaux (20a),
- une unité radio (2) pour transmettre les données de surveillance (UD, AUD) à un dispositif de maintenance externe (31) de l'émetteur de signaux,
- une interface d'alimentation en tension (3) qui est reliée électriquement à l'alimentation en tension électrique (21) de l'émetteur de signaux (20a),
- un accumulateur d'énergie électrique rechargeable (6) pour l'alimentation en énergie de l'unité radio (2) pendant un fonctionnement en émission/réception de l'unité radio (2),
**caractérisé en ce que** l'agencement de circuit (10, 10a) comprend en outre :
- une unité de limitation de courant (23a) qui est aménagée pour limiter un courant électrique, obtenu par l'intermédiaire de l'interface d'alimentation en tension (3), à une valeur maximale prédéterminée de telle sorte que sur la base de la consommation de courant de l'émetteur de signaux (20a), on peut détecter avec certitude, même en cas de fonctionnement actif de l'unité radio, si l'émetteur de signaux se trouve dans un état sous tension ou dans un état hors tension.

2. Agencement de circuit selon la revendication 1, dans lequel l'émetteur de signaux (20a) présente une architecture numérique pour générer des données de surveillance numériques (UD), et l'interface filaire électronique (1, 1a) présente un canal de transmission numérique.

3. Agencement de circuit selon la revendication 2, présentant une architecture numérique pour le traitement et la transmission des données de surveillance reçues (UD).

4. Agencement de circuit selon l'une quelconque des revendications précédentes, présentant une unité de processus centrale (5) pour exécuter au moins l'un des processus suivants consistant à :
- traiter les données de surveillance (UD) reçues de l'émetteur de signaux (20a),
- transmettre des données de surveillance traitées (AUD) à l'unité radio (2),
- traiter des données de réception (WB, EBD), de préférence des données de confirmation de réception (WB) du dispositif de maintenance externe (31) de l'émetteur de signaux,
- transmettre à l'émetteur de signaux (20a) des commandes de maintenance (WB) basées sur les données de réception (WB, EBD).

5. Agencement de circuit selon la revendication 4, dans lequel les données de réception (EBD) comprennent un message de confirmation indiquant que les données de surveillance (AUD) ont été reçues par le dispositif de maintenant externe (31) de l'émetteur de signaux.

6. Agencement de circuit selon la revendication 4 ou 5, dans lequel une commande de maintenance (WB) comprend la mise hors tension d'un élément fonctionnel (24) de l'émetteur de signaux (20a).

7. Agencement de circuit selon l'une quelconque des revendications 2 à 6, présentant une mémoire de données non volatile (6), de préférence une mémoire MRAM.

8. Agencement de circuit selon la revendication 7, dans lequel la mémoire de données non volatile (6) est aménagée pour mettre des données de surveillance (AUD) de l'émetteur de signaux (20a) en mémoire tampon jusqu'à ce qu'elles soient transmises par l'unité radio (2) au dispositif de maintenance externe (31) de l'émetteur de signaux.

9. Agencement de circuit selon l'une quelconque des revendications précédentes, dans lequel
- l'interface filaire électronique (1, 1a, 1b) est aménagée pour recevoir en continu des données de surveillance (UD) actuelles concernant l'état actuel des unités fonctionnelles (24) à surveiller de l'émetteur de signaux (20a),
- et l'unité radio (2) est aménagée pour transmettre les données de surveillance actuelles (AUD) rapidement au dispositif de maintenance externe (31) de l'émetteur de signaux.

10. Agencement de circuit selon l'une quelconque des revendications précédentes, qui est réalisé sous forme de carte d'extension qui peut être reliée électriquement à l'émetteur de signaux (20a) par insertion sur une platine de celui-ci.

11. Unité d'émission de signaux (20), présentant :
- une interface d'alimentation en tension électrique (21),
- au moins un émetteur de signaux (20a),
- un circuit de surveillance (25a, 25b) pour surveiller les unités fonctionnelles (24) dudit au moins un émetteur de signaux (20a), et
- un agencement de circuit (10) selon l'une quelconque des revendications précédentes.

12. Installation de signalisation lumineuse (32), présentant :
- au moins une unité d'émission de signaux (20),
- une unité de commande centrale (33) pour piloter ladite au moins une unité d'émission de signaux (20),
- un agencement de circuit (10) selon l'une quelconque des revendications 1 à 10.

13. Procédé permettant de retransmettre des données de surveillance (UD) d'un émetteur de signaux (20a) à autosurveillance d'une installation de signalisation lumineuse (32), présentant les étapes consistant à :
- recevoir de manière filaire, de l'émetteur de signaux (20a), des données de surveillance (UD) concernant des unités fonctionnelles (24) à surveiller de l'émetteur de signaux (20a) par un agencement de circuit (10, 10a) par l'intermédiaire d'une interface filaire électronique (1, 1a, 1b),
- transmettre les données de surveillance (AUD) à un dispositif de maintenance externe (31) de l'émetteur de signaux par une unité radio (2) de l'agencement de circuit (10, 10a),
- alimenter l'agencement de circuit (10, 10a) par l'intermédiaire d'une interface d'alimentation en tension (3) qui est reliée électriquement à l'alimentation en tension électrique (21) de l'émetteur de signaux (20a),
- limiter un courant électrique, obtenu par l'intermédiaire de l'interface d'alimentation en tension (3), à une valeur maximale prédéterminée de telle sorte que sur la base de la consommation de courant de l'émetteur de signaux (20a), on peut détecter avec certitude, même en cas de fonctionnement actif de l'unité radio, si l'émetteur de signaux se trouve dans un état sous tension ou dans un état hors tension, et
- alimenter l'unité radio (2) en énergie électrique par un accumulateur d'énergie électrique rechargeable (6) pendant un fonctionnement en émission/réception de l'unité radio (2).
